# EUROPEAN PATENT APPLICATION

(11) **EP 2 590 310 A1**
(43) Date of publication of application: **08.05.2013**
(21) Application number: 12176840.2
(22) Date of filing: 18.07.2012
(51) Int. Cl.: H02M 7/217

(54) **Hybrid rectifier and method of operating a hybrid rectifier**

(30) Priority: 04.11.2011 EP 11187884
(71) Applicant: Alstom Technology Ltd, 5400 Baden (CH)
(72) Inventor: Soeiro, Thiago Batista, 8051 Zürich (CH); Kolar, Johann Walter, 8044 Zürich (CH); Ranstad, Per, 352 35 Växjö (SE); Linner, Jörgen, 352 35 Växjö (SE)
(74) Representative: Simonsson, Erik

(57) **Abstract**

A hybrid rectifier (14a) comprises a line-commutated diode rectifier (11) with a boost stage (L1, L2, D1, D2, S1) in series and a controlled rectifier (15, 16) working in parallel thereto connected to a 3-phase AC input (17) and a DC output (18).

The controlled rectifier is choosen as a unidirectional 2-level "delta-switch" rectifier (15) or a 2-level "T-type" rectifier (16) as illustrated in figures 4 and 5.

## Description

### BACKGROUND OF THE INVENTION

The present invention relates to the technology of hybrid rectifiers. It refers to a hybrid rectifier according to the preamble of claim 1. It further refers to a method for operating such a hybrid rectifier.

### PRIOR ART

In general, 3-phase AC-to-DC power converters can be classified into line- and self-commuted rectifiers [see R. L. Alves, C. H. IIIa Font and I. Barbi, "Novel unidirectional hybrid three-phase rectifier system employing boost topology," in Proc. of PESC 2005, pp. 487-493, 2005]. The first, also known as passive rectifiers employ diode and/or thyristor based switches, which commute at the zero crossing of the AC side currents. The other concept, also known as active rectifiers, uses semiconductor technologies, such as, IGBTs, MOSFETs, GTOs, IGCTs, and so forth, which are capable of actively controlling the AC side currents.

Passive rectifiers are commonly inexpensive, very reliable and highly efficient. On the other hand, they usually inject significant current harmonics into the power grid and additional filtering concepts would be necessary to attain unity power factor operation. Consequently, simple rectifiers do not meet IEC 61000-3-2/61000-3-4 guidelines [see R. L. Alves et al.].

From the power quality point of view, the active rectifiers are the most promising concept as they can operate at low current total harmonic distortion (THD) and high power factor. Nevertheless, they are more expensive, less reliable and show lower efficiency than passive rectifiers.

In medium and high power applications the pursuit for unity power factor rectifier topologies, which combine robustness, simplicity, low cost, and high power density with light weight, has lead the research in this area to a new class of AC-to-DC converters, the hybrid rectifiers. The term "hybrid rectifier" denotes the parallel connection of a line- and a self-commuted converter or rectifier [see R. L. Alves, and I. Barbi, "Analysis and implementation of a hybrid high-power-factor three-phase unidirectional rectifier," IEEE Trans. Power Electron., vol. 24, no. 3, pp. 632-640, Mar. 2009].

Hybrid rectifiers aim to embrace the best features of a passive rectifier and the advantages of active rectifiers. In general, the line-commuted based converter is set to operate with low frequency, processing the highest power rating, while the active system is adjusted to work at higher frequencies and lower power rating. Therefore, a highly efficient rectifier system, capable of providing close to sinusoidal shaped line current can be assembled. When compared to rectifier systems based simply on connection of active rectifiers, the hybrid systems are usually cheaper, more robust and more efficient [see R. L. Alves, and I. Barbi].

Due to the fact that the power processed by a hybrid converter is shared between the integrating rectifier units, operation under higher efficiency and robustness can be accomplished when compared to a single self-commuted rectifier solution. In addition, in case of failure of one of the rectifier units, the other working structures can continue delivering power to the load at controlled DC-link voltage.

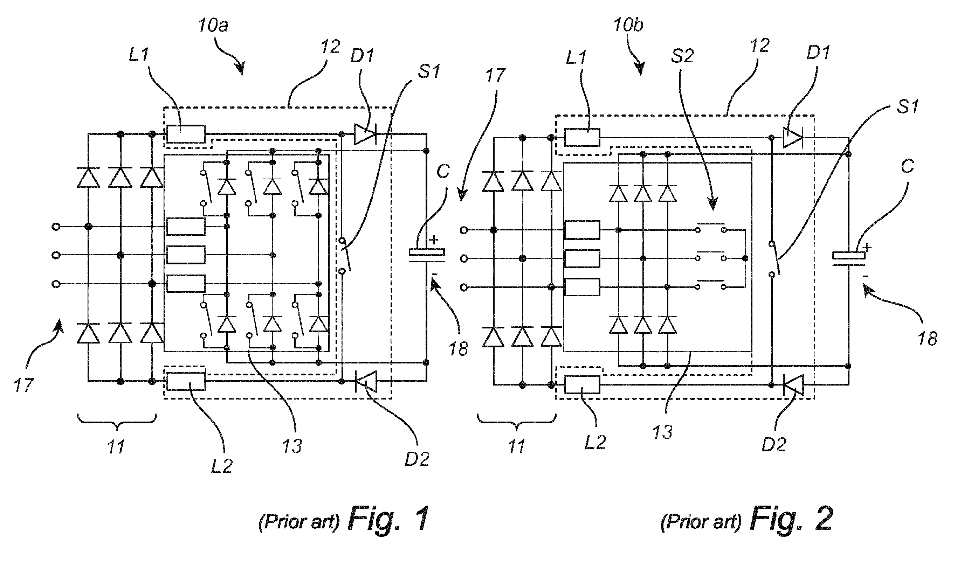

Fig. 1 and 2 present two prior art hybrid rectifier topologies suitable for shaping the line currents, and also to control the DC-link voltage, U_{DC}. The 3-phase hybrid rectifier 10a of Fig. 1, which is connected to a mains with an AC input 17, comprises a line-commuted rectifier 11, a boost converter 12 with two diodes D1, 2, two inductances L1, 2 and a switch S1, and a self-commuted rectifier 13, which load a capacitance C at a DC output 18 with DC current. However, these known systems are less reliable and commonly display higher losses than necessary.

In the respective control schemes proposed [see R. L. Alves et al.], the currents are not optimally shared between both paralleled rectifiers 11 and 13. Therein, the hybrid rectifier based on unidirectional PWM rectifiers need to limit the rating of active power processed by the PWM rectifier into 45% in order to achieve sinusoidal shaped line currents; thus the power sharing is not an optimum.

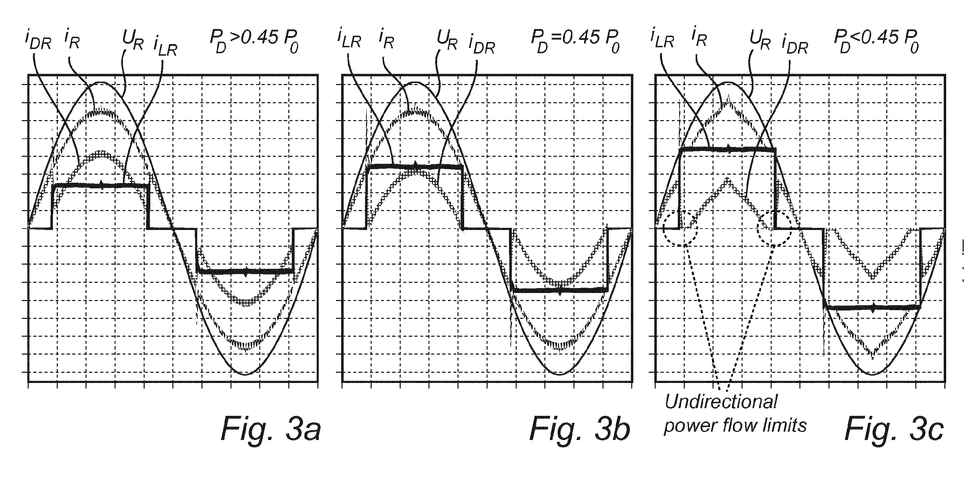

The simulation result showing the current formation of the known hybrid system with the control scheme proposed is presented in Fig. 3, where waveforms of the rectifier voltage u_{R} and rectifier currents i_{R}, i_{DR} and i_{LR} are shown for three different operation modes.

### SUMMARY OF THE INVENTION

It is an object of the present invention to provide a hybrid rectifier, which has an improved efficiency and is capable of providing close to sinusoidal shaped line currents.

It is another object of the invention to provide a method for operating such a hybrid rectifier.

These and other objects are obtained by a hybrid rectifier and operating method according to claims 1, 4 and 8.

A first hybrid rectifier according to the invention comprises a line-commuted rectifier and a self-commuted rectifier working in parallel between a 3-phase AC input and a DC output. It is characterized in that said self-commuted rectifier is a 2-level unidirectional delta-switch rectifier.

According to an embodiment of the invention said self-commuted rectifier comprises a 3-phase rectifier bridge being interconnected by means of a delta switch arrangement.

According to another embodiment of the invention it further comprises a boost converter.

A second hybrid rectifier according to the invention comprises a line-commuted rectifier and a self-commuted rectifier working in parallel between a 3-phase AC input and a DC output. It is characterized in that said self-commuted rectifier is a 3-level unidirectional T-type rectifier.

According to an embodiment of the invention the DC output has a center tap, that said self-commuted rectifier comprises a 3-phase rectifier bridge being connected to said center tap by means of bidirectional (current) and bipolar (voltage) switches.

According to another embodiment of the invention said bidirectional (current) and bipolar (voltage) switches each comprise a switch configuration with two active switches.

According to another embodiment of the invention it further comprises a boost converter.

In the method according to the invention the sinusoidal shaped line currents are formed by the sum of the currents of the combined rectifiers and the output current is derived from the sum of the output current of each paralleled rectifier.

According to an embodiment of the invention a voltage control loop establishes a DC voltage regulation and an output power sharing between the combined rectifiers of the hybrid system.

### BRIEF DESCRIPTION OF THE DRAWINGS

The present invention is now to be explained more closely by means of different embodiments and with reference to the attached drawings.
- Fig. 1: shows a first hybrid rectifier topology of the prior art with a bidirectional rectifier;
- Fig. 2: shows a second hybrid rectifier topology of the prior art with a unidirectional rectifier;
- Fig. 3: depicts simulation results showing the current formation of a known hybrid rectifier system;
- Fig. 4: shows a hybrid rectifier topology according to an embodiment of the invention with a 2-level unidirectional delta-switch rectifier;
- Fig. 5: shows a hybrid rectifier topology according to another embodiment of the invention with a 3-level unidirectional T-type rectifier;
- Fig. 6-8: show basic switch types to be incorporated into the hybrid rectifiers according to Fig. 4 or 5, with a unipolar switch (Fig. 6), bidirectional (current) and bipolar (voltage) switches (Fig. 7) employing a single switch (Fig. 7(a)), or two active switches (Fig. 7(b) and (c)), and a 3-phase power module (Fig. 8);
- Fig. 9: shows a suitable circuit implementation of the proposed new 2-level unidirectional hybrid delta-switch rectifier according to Fig. 4;
- Fig. 10-11: show novel unidirectional hybrid T-type systems according to further embodiments of the invention;
- Fig. 12: shows the current reference generation for the DC-DC boost rectifier;
- Fig. 13: shows simulation results for the unidirectional hybrid delta-switch rectifier for three different operation modes: (a) ideal P_{D}>0.23Pₒ; (b) unity power factor limit operation P_{D} =0.23Pₒ; and (c) distorted operation P_{D} <0.23Pₒ;
- Fig. 14: shows a control scheme as an alternative for the control scheme shown in Fig. 9; and
- Fig. 15: depicts simulation results for the unidirectional hybrid delta-switch rectifier for different operation modes.

### DETAILED DESCRIPTION OF DIFFERENT EMBODIMENTS OF THE INVENTION

In the present application the hybrid rectifier concept is distinguished from an ordinary parallel association of rectifiers. For instance, in an AC-to-DC system assembled by a parallel connection of two unity power factor rectifiers, the input current in each unit is ideally sinusoidal. Additionally, each rectifier part is normally set to operate at the same switching frequency and to equally share the total load power.

On the other hand, the rectifier units of the hybrid arrangements can operate with different power ratings at different frequencies. In these systems the line currents with sinusoidal shape are obtained by the combination of the currents drained for each rectifier unit, which doesn't necessarily display high power factor.

Finally, hybrid rectifiers cannot be classified as active filters due to the fact that the self-commuted rectifier, in this case, processes high amounts of active power, while active filters are intended to process only reactive power [see C. H. IIIa Font and I. Barbi, "A new high power factor bidirectional hybrid three-phase rectifier," in Proc. of APEC 2006, pp. 1300-1306, 2006].

In the present application, many new highly efficient 3-phase hybrid rectifiers with controlled DC-link voltage, capable of providing close to sinusoidal shaped line currents are proposed.

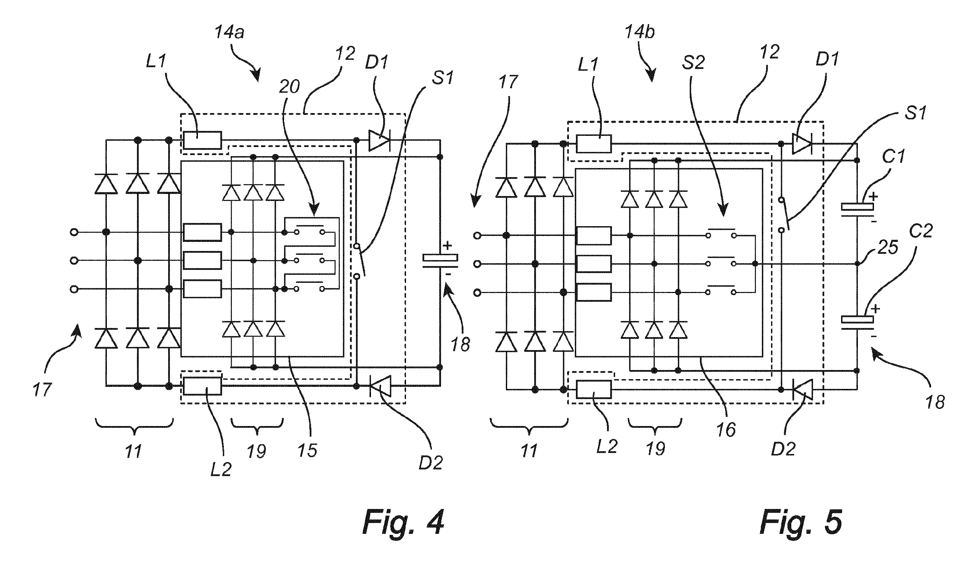

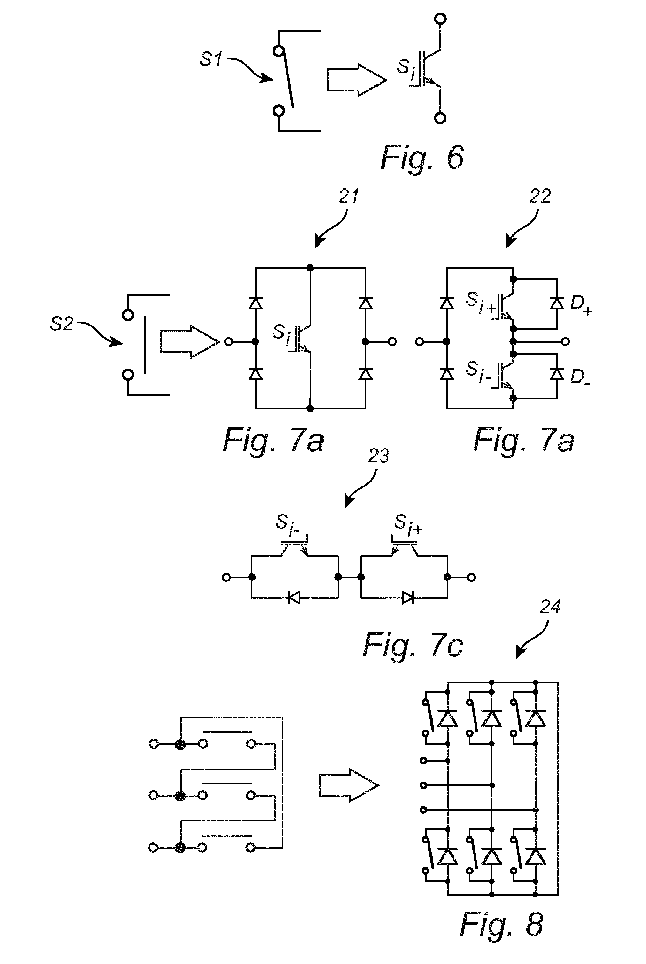

For example, the hybrid rectifiers depicted in Fig. 4 and 5 are novel rectifier concepts, which could be implemented with many basic switch types or switch configurations 21-24 shown in Fig. 6-8. Fig. 6 shows a unipolar switch S1 comprising a single active switch Sᵢ, Fig. 7 shows various bidirectional (current) and bipolar (voltage) switches employing a single active switch Sᵢ (switch configuration 21 in Fig. 7(a)), or two active switches Sᵢ, and Sᵢ- (switch configuration 22 and 23 in Fig. 7(b) and (c)), and a 3-phase power module (switch configuration 24 in Fig. 8).

Additionally, a novel control method for hybrid rectifiers, able to handle a phase loss without changing the controller structure, is proposed. This new control scheme enhances the power sharing rating of the paralleled rectifier units; thus the systems can easily achieve higher efficiency than the control strategy introduced in the prior art [see for example R. L. Alves et al.].

Figs. 4 and 5 show two new hybrid rectifiers 14a and 14b suitable for shaping the line currents and also to control the DC-link voltage of the system. These converter concepts are constructed by the parallel connection of a controlled 3-phase diode bridge boost rectifier with a 3-phase unity power factor boost-type rectifier, i.e. a line-commuted rectifier 11, a self-commuted rectifier 15 or 16, respectively, and a boost converter 12.

In Fig. 4 the self-commuted system 15 is based on a 2-level unidirectional delta-switch converter technology with a delta switch arrangement 20 [see Reference 6]. For the hybrid converter 14b depicted in Fig. 5, a 3-level unidirectional T-type rectifier is employed within the self-commuted system 16, wherein switches S2 connect a 3-phase rectifier bridge with a center tap 25 at the DC output 18 at a series connection of two capacitances C1 and C2.

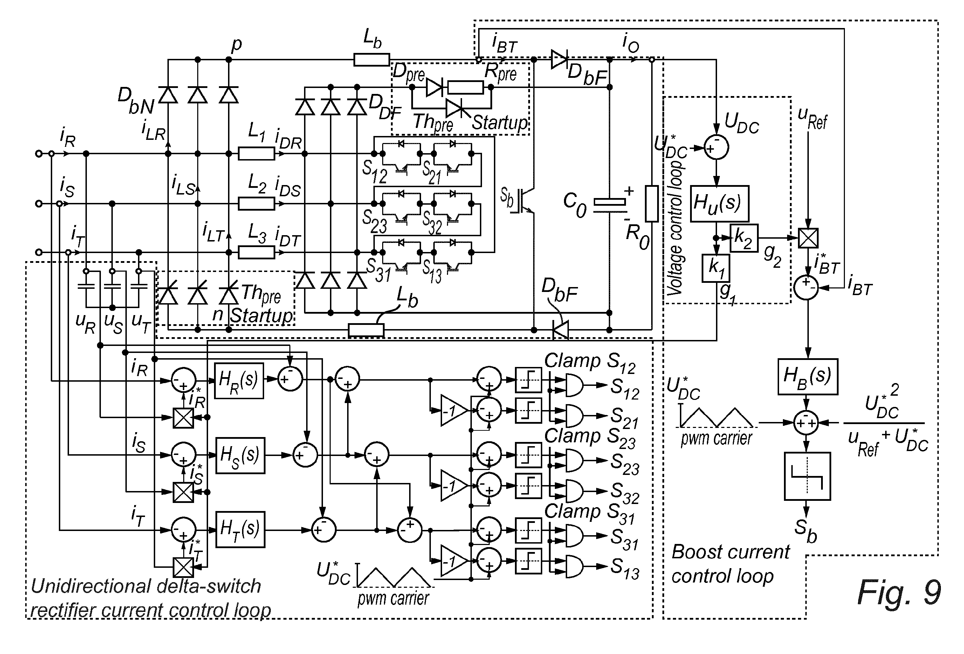

In fact, it is desired that the PWM rectifier processes the lowest power as possible in order to make the system more efficient. Therefore, the control proposed in Fig. 9 is suitable for this matter.

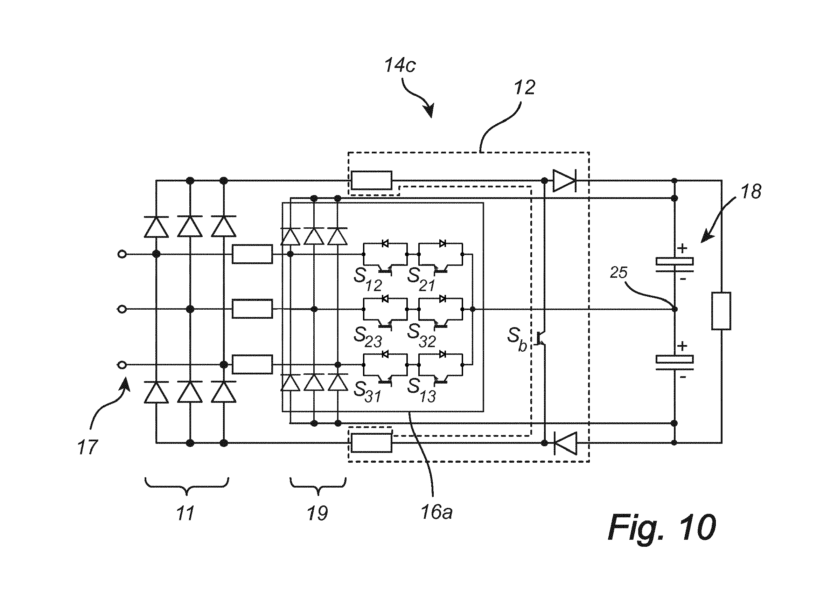

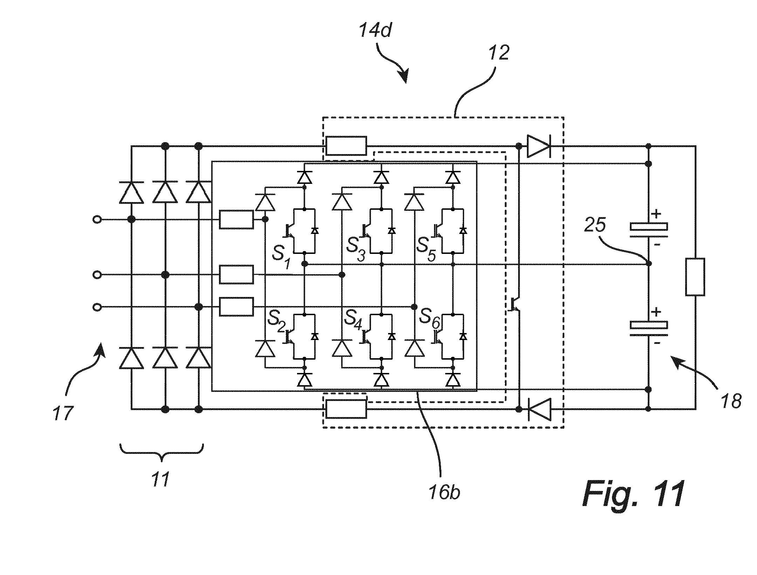

Fig. 9 shows a suitable circuit implementation of the proposed new 2-level unidirectional hybrid delta-switch rectifier (see Fig. 4), where the sinusoidal shaped line currents, i_{R,S,T}, are formed by the sum of the currents of the combined rectifiers, i_{LR,LS,LT} and i_{DR,DS,DT}. Correspondingly, the output current, iₒ, is derived from the sum of the output current of each paralleled rectifier unit. Novel unidirectional hybrid T-type systems 14c and 14d of the kind shown in Fig. 5 can be seen in Figs. 10 and 11. Here the respective self-commuted rectifiers 16a and 16b comprise switch configurations according to 23 in Fig. 7(c) (Fig. 10) or 22 in Fig. 7(b) (Fig. 11). The control scheme shown in Fig. 9 can be easily adapted for these two hybrid T-type converters.

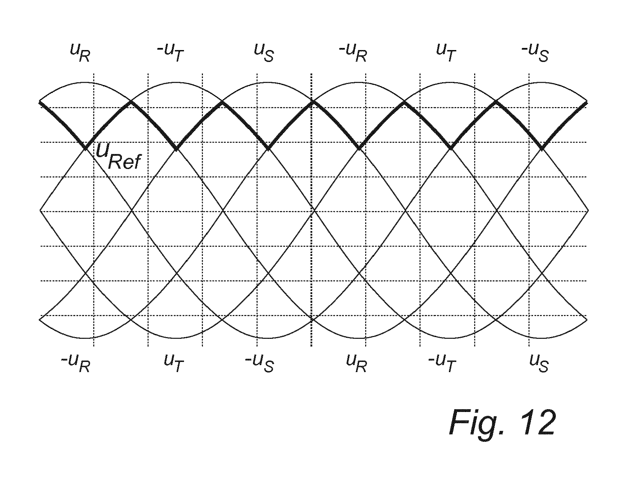

In order to guarantee the commutation of the diode bridge rectifier 11 at low frequency, the controlled DC-DC boost rectifier 12 must operate in Continuous Conduction Mode (CCM). In contrast, the input currents of the delta-switch rectifier (Fig. 4), i_{DR,DS,DT}, are controlled to allow high power factor operation. The current reference generation for the DC-DC boost rectifier 12 is shown in Fig. 12.

For hybrid rectifiers employing a bidirectional (current) self-commuted converter, the high power factor operation can be theoretically achieved for any combination of power shared between the compounding rectifiers. For example, if the line-commuted rectifier 11 is set to process 100% of the output power, Pₒ, the bidirectional system, working as an active filter, will be able to compensate the current harmonics, attaining unity power factor operation.

Unidirectional hybrid rectifiers have conditional high power factor operation, which is reliant on the rated active power processed by the self-commuted converter, P_{D}. Due to the unidirectional power flow characteristic, the high line power quality operation can only be achieved if the instantaneous current absolute values of the line-commuted rectifier, i_{LR,LS,LT}, are smaller than the absolute values of the line current references, i_{R,S,T}.

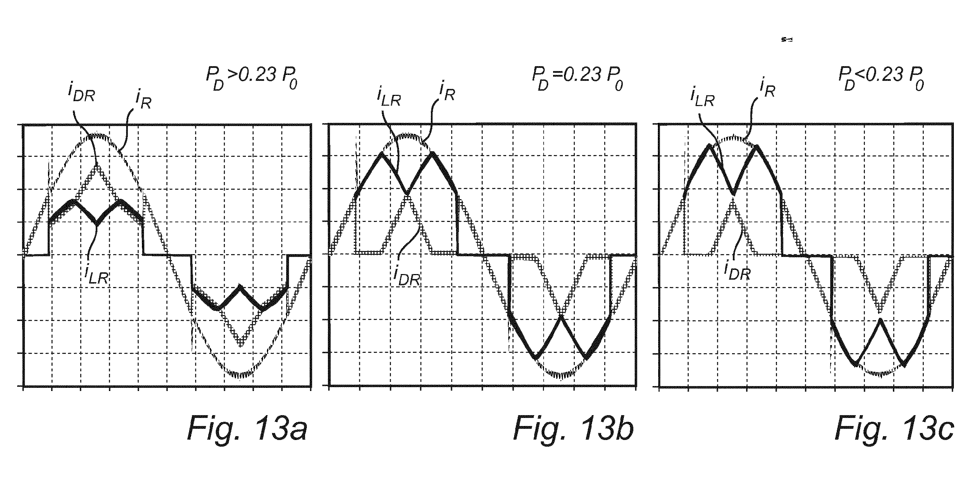

The simulation result showing this operation mode is presented in Fig. 13(a). The minimum rated output power processed by the active rectifier, P_{D}, which allows imposed sinusoidal line currents, is given by P_{D}≈0.23Pₒ. This operation condition is illustrated in Fig. 13(b). Finally, for P_{D}<0.23Pₒ, the line currents become distorted as shown in Fig. 13(c).

The structure of the proposed control scheme is illustrated in Fig. 9. The voltage control loop establishes the DC voltage regulation and the output power sharing between the combined rectifiers of the hybrid system, which is defined mainly by the ratio of the gains *k₁* and *k₂*. In fact, the best compromise between high power factor and high efficiency operations is achieved when P_{D}≈0.23Pₒ. For the proposed control, this is established by simply setting *k₁*=1 and *k₂* =1.

The line current references, i*_{R,S,T}, are generated by multiplying the sensed mains voltages, u_{R,S,T}, by a reference conductance, g₁, which is defined by the superimposed output voltage controller, *Hᵤ*(*s*), rated by the established power loading sharing factor *k₁*. Together with a mains voltage feed-forward signal, the current controllers, *H*_{*R*,*S*,}*_{T}(s)*, generate the required converter phase voltages. Subsequently, these signals are converted into line-to-line voltages. Finally, two independent PWM signals are generated guided by the clamping signals, derived from the grid voltages. The resulting clamping actions, considering all 60° space vector sectors, are shown in Table 1 (below). Note that "1" indicates that the corresponding active switch is turned on, "0" indicates the turn-off state, and "pwm" indicates that the transistor is modulated by the current controller.

**Table 1**

| **Sector** | **S₁₂** | **S₂₁** | **S₂₃** | **S₃₂** | **S₁₃** | **S₃₁** |
|---|---|---|---|---|---|---|
| 330°-30° | pwm₁₂ | 1 | 0 | 0 | pwm₁₃ | 1 |
| 30°-90° | 0 | 0 | pwm₂₃ | 1 | pwm₁₃ | 1 |
| 90°-150° | 1 | pwm₂₁ | pwm₂₃ | 1 | 0 | 0 |
| 150°-210° | 1 | pwm₂₁ | 0 | 0 | 1 | pwm₃₁ |
| 210°-270° | 0 | 0 | 1 | pwm₃₂ | 1 | pwm₃₁ |
| 270°-330° | pwm₁₂ | 1 | 1 | pwm₃₂ | 0 | 0 |

For the single-switch boost converter 12 the current i_{BT} is sensed and compared to the reference current signal, i*_{BT}, generated by multiplying the reference signal u_{ref} (see Fig. 12), which is derived from the sensed grid voltages, by the conductance g₂. The error signal is applied to the current compensator *H_{B}(s)* and the PWM modulator, incorporating a feed-forward control loop, generates the gate signal of the boost switch.

Notice that by employing P-regulators for the controllers *H*_{*R*,*S*,}*_{T}(s)*, the proposed control scheme becomes able to handle a phase loss operation without any change in the control structure being necessary. A respective converter specification is presented in Table 2 (see below). The results of simulations demonstrate that the line currents, _{IR,S,T}, can effectively follow the sinusoidal input voltages, u_{R,S,T}, even during mains phase loss. The THD of the line currents for 10 kW operation is approximately 3.5%.

**Table 2**

| | |
|---|---|
| Input voltage, *u_{R,S,T}*: | 230 Vrms |
| Input frequency, *fᵢₙ*: | 50 Hz |
| Switching frequency, *fₛ*: | 50 kHz |
| DC-link voltage, *U_{DC}*: | 800 V |
| Output power, *P₀*: | 10 kW |
| Self-commuted rectifier active power, *P_{D}*: | 4.5 kW |
| Output capacitor, *C₀*: | 1.47 mF |
| DC inductor, *L_{b}*: | 1 mH |
| Delta-switch rectifier inductors, *L_{1,2,3}*: | 1 mH |

Experimental results obtained with a unidirectional hybrid delta-switch rectifier prototype demonstrate the performance and feasibility of this solution. The self-commuted system was air-cooled and had a power to weight ratio of 1.32 kW/kg. The power density of this rectifier was 2.35kW/dm³. A digital signal processing board with a TI DSP and a Lattice FPGA was used to implement the control strategy shown in Fig. 9. Three inductors with inductance values of 326µH were employed. In total, eighteen 82µF/450V electrolytic capacitors were arranged in parallel.

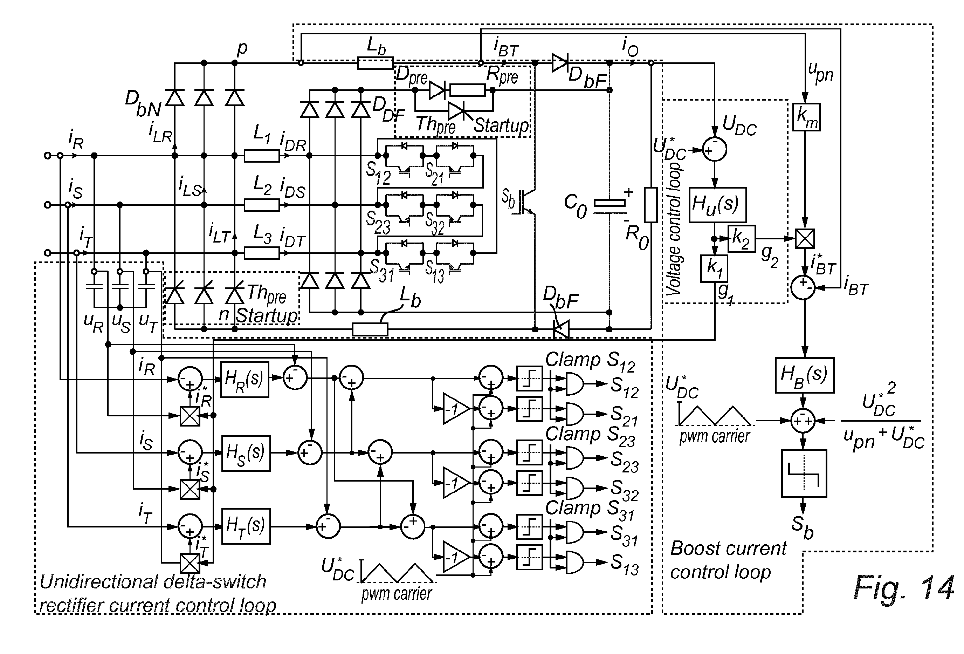

One alternative for the control scheme shown in Fig. 9, which also allows 2-phase operation with high power factor, is illustrated in Fig. 14. The main difference is on the current generation scheme of the single-switch boost converter. Here, the reference current signal, i*_{BT}, is generated by multiplying the sensed rectified voltage, uₚₙ, by the conductance g₂.

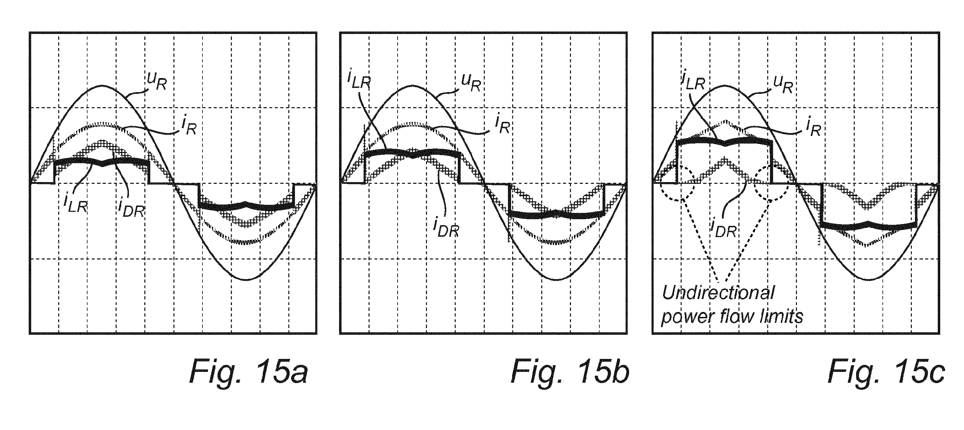

The minimum rated output power processed by the active rectifier, P_{D}, which allows imposed sinusoidal line currents, is given by P_{D}≈0.43Pₒ. The ideal condition P_{D}>0.43Pₒ is illustrated in Fig. 15(a). The unit power factor limit operation P_{D}≈0.43Pₒ is illustrated in Fig. 15(b). Finally, for P_{D}<0.43Pₒ, the line currents become distorted as shown in Fig. 15(c).

For the alternative control scheme according to Fig. 14, simulation results of the unidirectional hybrid delta-switch rectifier operating close to the unity power factor limit, α≈0.45, demonstrate that the line currents, i_{R,S,T}, can effectively follow the sinusoidal input voltages, u_{R,S,T}, even during mains phase loss.

Unidirectional hybrid rectifiers have conditional high power factor operation, which is reliant on the rated active power processed by the self-commuted converter, P_{D}. However, due to the unidirectional power flow characteristic, the high line power quality operation can only be achieved if the instantaneous current absolute values of the line-commuted rectifier, i_{LR,LS,LT}, are smaller than the absolute values of the line current references, i_{R,S,T}. With the control scheme presented in Fig. 9 and *k₁*=1 and *k₂* =1 this condition is always satisfied, because the current references for each paralleled rectifier is found exactly equal to the desired line currents, i_{R,S,T}, which avoid the overlap of the currents of the line-commuted rectifier.

### LIST OF REFERENCE NUMERALS

- 10a,b: hybrid rectifier
- 11: line-commuted rectifier
- 12: boost converter
- 13: self-commuted rectifier
- 14a-d: hybrid rectifier
- 15,16: self-commuted rectifier
- 16a,b: self-commuted rectifier
- 17: AC input
- 18: DC output
- 19: rectifier bridge (3-phase)
- 20: delta switch arrangement
- 21-24: switch configuration
- 25: center tap
- C,C1,2: capacitance
- L1,2: inductance
- S1,2: switch
- S_{i,Si+,}Sᵢ₋: active switch

## Claims

1. Hybrid rectifier (14a), comprising a line-commuted rectifier (11) and a self-commuted rectifier (15) working in parallel between a 3-phase AC input (17) and a DC output (18), **characterized in that** said self-commuted rectifier (15) is a 2-level unidirectional delta-switch rectifier.

2. Hybrid rectifier according to claim 1, **characterized in that** said self-commuted rectifier (15) comprises a 3-phase rectifier bridge (19) being interconnected by means of a delta switch arrangement (20).

3. Hybrid rectifier according to claim 1 or 2, **characterized in that** it further comprises a boost converter (12; L1,2; D1,2; S1).

4. Hybrid rectifier (14b-d), comprising a line-commuted rectifier (11) and a self-commuted rectifier (16, 16a,b) working in parallel between a 3-phase AC input (17) and a DC output (18), **characterized in that** said self-commuted rectifier (16, 16a,b) is a 3-level unidirectional T-type rectifier.

5. Hybrid rectifier according to claim 4, **characterized in that** the DC output (18) has a center tap (25), that said self-commuted rectifier (16, 16a,b) comprises a 3-phase rectifier bridge (19) being connected to said center tap (25) by means of bidirectional (current) and bipolar (voltage) switches (S2).

6. Hybrid rectifier according to claim 3, **characterized in that** said bidirectional (current) and bipolar (voltage) switches (S2) each comprise a switch configuration (22, 23) with two active switches (S_{i+,}Sᵢ₋).

7. Hybrid rectifier according to one of the claims 4-6, **characterized in that** it further comprises a boost converter (12; L1,2; D1,2; S1).

8. Method for operating a hybrid rectifier (14a-d) according to one of the claims 1-7, wherein the sinusoidal shaped line currents (i_{R,S,T}) are formed by the sum of the currents (i_{LR,LS,LT}, i_{DR,DS,DT}) of the combined rectifiers (11; 15, 16, 16a,b) and the output current (iₒ) is derived from the sum of the output current of each paralleled rectifier (11; 15, 16, 16a,b).

9. Method according to claim 8, **characterized in that** a voltage control loop establishes a DC voltage regulation and an output power sharing between the combined rectifiers (11; 15, 16, 16a,b) of the hybrid system.
